Europäisches Patentamt

(19) European Patent Office

Office européen des brevets

(11) Publication number: **0 294 439 B1**

(12) # EUROPEAN PATENT SPECIFICATION

(45) Date of publication of patent specification :
26.06.91 Bulletin 91/26

(51) Int. Cl.⁵ : **G01B 3/52**

(21) Application number : 88900454.5

(22) Date of filing : 14.12.87

(86) International application number :
PCT/DK87/00157

(87) International publication number :
WO 88/04763 30.06.88 Gazette 88/14

(54) THREAD MEASURING TOOL.

(30) Priority : 17.12.86 DK 6101/86

(43) Date of publication of application :
14.12.88 Bulletin 88/50

(45) Publication of the grant of the patent :
26.06.91 Bulletin 91/26

(84) Designated Contracting States :
AT BE CH DE FR GB IT LI LU NL SE

(56) References cited :
WO-A-83/03664
US-A- 1 654 233

(73) Proprietor : LARSEN, Grundtvorm Leif
Sibbevej 10 Esbonderup
DK-3230 Graested (DK)

(72) Inventor : LARSEN, Grundtvorm Leif
Sibbevej 10 Esbonderup
DK-3230 Graested (DK)

(74) Representative : Larsen, Hans Ole et al
Larsen & Birkeholm ApS Europaeisk
Patentbureau P.O. Box 200
DK-2630 Taastrup (DK)

## Description

The invention relates to a thread measuring tool with a "go" plug gauge and a "no go" plug gauge designed at each end of an elongated housing, which housing comprises a thread bushing screwed in the one end of the housing, in which thread bushing a through-going spindle is mounted in the interior of the housing, the opposite ends of said spindle being connected to said plug gauges, and where a plug gauge holder with a measuring value indicator is arranged around the "go" plug gauge, which plug gauge holder is inserted telescopically into the housing against the resistance of a spring.

Thread measuring tools of this type, known from the publication WO-A-83/03664, can be used for checking the tolerances of the thread holes while at the same time the thread depth can be read direct from a measuring value indicator.

By this hitherto known tool the "go" plug gauge and the "no go" plug gauge are designed at each end as an integrated part of a through-going spindle extending through the housing.

In use the "go" plug gauge and the "no go" plug gauge are worn, and they may both be damaged as well. When one or both plug gauges do no longer meet the requirements in respect of tolerance, shape etc., the whole tool must be discarded or at best be provided with a new spindle with plug gauges.

The replacement of the spindle with plug gauges can normally only take place while at the same time adjusting the measuring value indicator of the tool, because the plug gauge must be flush with the end of the plug gauge holder in order to provide an accurate reading of the thread depth.

It is the object of the invention to overcome these short-comings of the known measuring tool, and this is achieved by a thread measuring tool of the kind described above, which tool according to the invention is characterized in that the one end of the spindle is provided with a thread on the outside designed to co-operate with an interior thread in the thread bushing in such a manner that the placing of the plug gauge in the housing is adjustable, that said plug gauges are provided with a shank which can be inserted into a bore at each end of the spindle, and that the shanks and the bores are cylindrical and slightly tapered, respectively, or vice versa.

Considerable advantages in use and by way of reduced costs are hereby obtained. First of all the replacement of a worn down or damaged gauge is simple and comparatively inexpensive. It will thus suffice to replace only one gauge thereby saving money for the replacement of the other gauge. After the replacement of a plug gauge it will be possible to adjust the plug gauge of the tool precisely to the measuring value indicator by screwing the spindle into the thread bushing. Add to this that other sizes of plug gauges can be placed in the same tool whereby both the field of tolerance as well as thread types and sizes can be varied within a wide framework within the one and same tool. This provides large practical advantages and reduces the costs considerably.

This replacement is achieved in a simple and reliable manner, when the plug gauges are provided with a shank which can be inserted into a bore in the spindle, provided that the shank and the bore are cylindrical and slightly tapered, respectively, or vice versa, in that the sticking together is comparatively simple to release under tension, while it is exceedingly stable also regarding the measure.

Moreover, it is advantageous to provide locking means between the thread bushing and the spindle, by way of example in the form of a screw in the thread bushing which can be screwed into a recess in the spindle.

The thread measuring tool according to the invention will now be described in further detail with reference to the drawing, in which

Fig. 1 shows the individual parts of the tool,

Fig. 2 shows the assembled tool, and

Fig. 3 is a section through the tool on a larger scale.

The drawing shows an example of a preferred embodiment of the thread measuring tool.

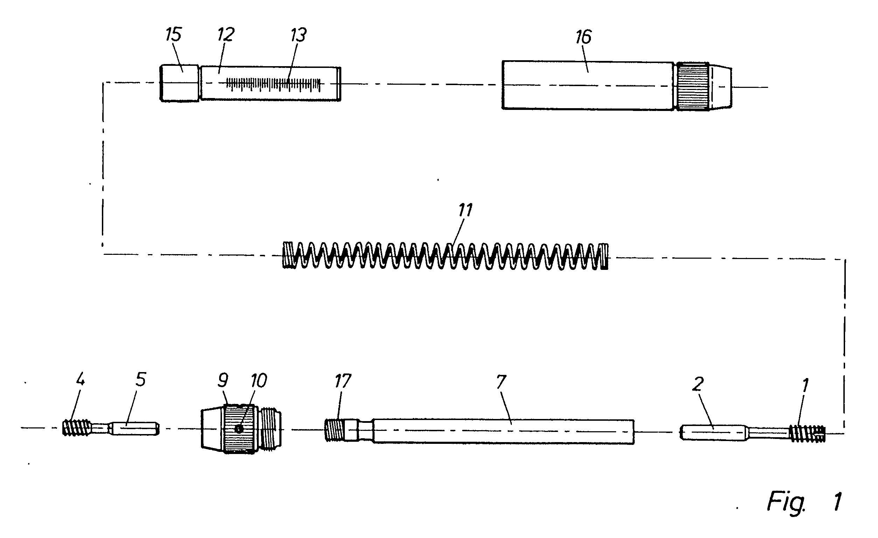

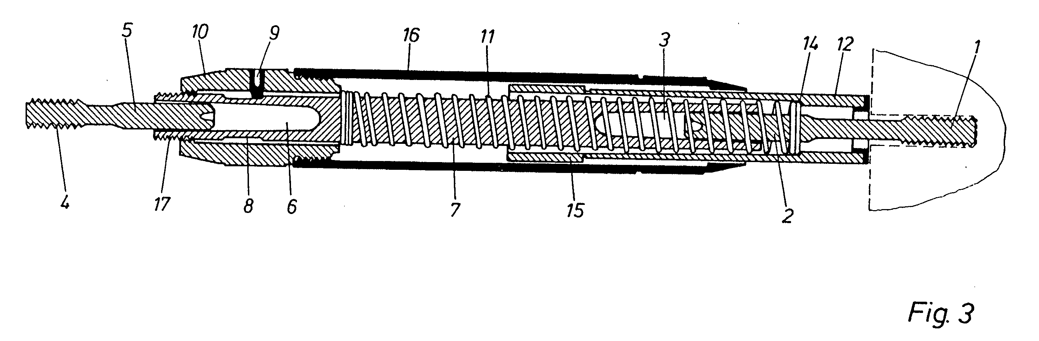

The individual parts, cf. particularly figs. 1 and 3, comprise a through-going spindle 7 being provided with a bore 3, 6, said bores being somewhat pointed towards the bottom for the formation of a tapered guide for the shanks 2, 5 of the plug gauges.

The plug gauge 1 is provided with a cylindrical shank 2, and similarly the "no go" plug gauge 4 is provided with a cylindrical shank 5. By pressing the shanks 2, 5 into the tapered bores 3, 6 the gauges are held fixedly and accurately in the spindle 7.

Moreover, the spindle 7 is at one end provided with an external thread 17 which can be screwed into an interacting inside thread in a thread bushing 10 forming the one end of the housing. By means of this thread 17, the spindle 7 can be adjusted in relation to the housing in that the spindle can be screwed in and out. In order to be able to lock the spindle 7 in the housing, a stop screw 9 is screwed into the thread bushing 10, which stop screw 9 can be screwed down to abut the spindle 7 in a recess 8.

The remaining part of the housing comprises a tube 16 into which the thread bushing 10 can be screwed. In the opposite end of the housing 16 it is somewhat pointed and is moreover cut off straight. This is in order to read the depth accurately, said depth being read from a measuring indicator 13 placed on the outside of the plug gauge holder 12. This is constructed as a tube with a sliding guide member 15 at the inner end, which guide member can slide inside the housing 16, cf. fig. 3.

Inside, the gauge holder 12 is provided with a recess 14, on which a coil spring 11 can abut. The opposite end of the spring abuts the end flange of the thread bushing 10 in the housing.

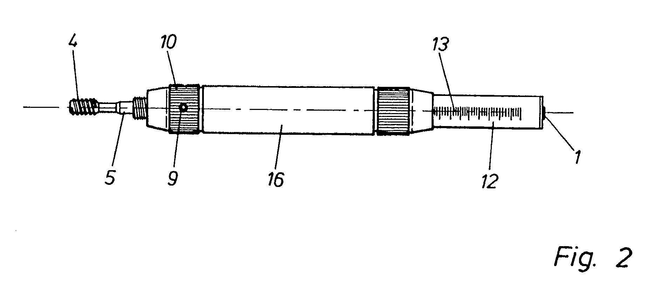

The spring 11 presses the gauge holder 12 outwards so that it can slide out and cover the plug gauge 1, as shown in fig. 2.

The entire measuring tool can be assembled in the manner shown in fig. 1. Once the tool is assembled, it appears as shown in fig. 2. The plug gauge 1 is hidden by the gauge holder 12, and the tool is ready for use.

In fig. 3 the tool is shown in use in that it is screwed down into a thread hole being indicated by the dotted line. It is seen that the gauge holder 12 is inserted into the housing, and the length, and hence the depth, of the thread can be read from the measuring indicator 13 against the end edge of the housing 16.

The two plug gauges 1, 4 can be removed and replaced by others, if so required. The tool may be adjusted if the plug gauge 1 is no longer flush with the end of the plug gauge holder 12. This takes place by releasing the stop screw 9 and turning the gauge 1 and spindle 7 until the gauge is flush with the end of the gauge holder. The tool is then adjusted and will provide an exact indication of the thread depth.

## Claims

1. A thread measuring tool with a "go" plug gauge (1) and a "no go" plug gauge (4) designed at respective ends of an elongated housing (16), which housing comprises a thread bushing (10) screwed into one end of the housing (16), in which thread bushing a through-going spindle (7) is mounted in the interior of the housing (10, 16), the opposite ends of said spindle being connected to said plug gauges (1, 4), and where a plug gauge holder (12) with a measuring value indicator (13) is arranged around the "go" plug gauge (1), which plug gauge holder (12) is inserted telescopically into the housing (10, 16) against the resistance of a spring (11), **characterized** in that one end of the spindle (7) is provided with a thread (17) on the outside designed to co-operate with an interior thread in the thread bushing (10) in such a manner that the placing of the plug gauge (1) in the housing (10, 16) is adjustable, that said plug gauges (1, 4) are provided respectively with a shank (2, 5) which can be inserted into respective bores (3, 6) at respective ends of the spindle (7), and that the shanks (2, 5) and the bores (3, 6) are cylindrical and slightly tapered, respectively, or vice versa.

2. A thread measuring tool according to claim 1, **characterized** in that the thread bushing (10) is provided with a transverse screw (9) which, during co-operation with a recess (8) in the spindle (7), is designed to lock together the spindle (7) with the thread bushing.

## Ansprüche

1. Gewindemeßgerät mit einem Gutlehrdorn (1) und einem Ausschußlehrdorn (4), die an entsprechenden Enden eines länglichen Gehäuses (16) ausgebildet sind, wobei das Gehäuse eine Gewindehülse (10) aufweist, die in ein Ende des Gehäuses (16) eingeschraubt ist, wobei in die Gewindehülse eine Durchgangsspindel (7) eingebracht ist, in das Innere des Gehäuses (10, 16), wobei die einander gegenüberliegenden Enden der Spindel mit den Lehrdornen (1, 4) verbunden sind, und wobei ein Lehrdornhalter (12) mit einer Meßwertanzeige (13) um den Gutlehrdorn (1) angeordnet ist, wobei der Lehrdornhalter (12) teleskopartig in das Gehäuse (10, 16) gegen den Widerstand einer Feder (11) eingeführt ist, **dadurch gekennzeichnet,** daß ein Ende der Spindel (7) mit einem Gewinde (17) an der Außenseite versehen ist, das so ausgebildet ist, daß es mit einem Innengewinde in der Gewindehülse (10) derart zusammenwirkt, daß das Anordnen des Lehrdorns (1) in dem Gehäuse (10, 16) einstellbar ist, daß die Lehrdorne (1, 4) entsprechend mit einem Schaft (2 bzw. 5) versehen sind, die in entsprechende Bohrungen (3, 6) an entsprechenden Enden der Spindel (7) eingeführt werden können, und daß die Schäfte (2, 5) und die Bohrungen (3, 6) zylindrisch bzw. leicht schräg sind oder umgekehrt.

2. Gewindemeßerät nach Anspruch 1, **dadurch gekennzeichnet,** daß die Gewindehülse (10) mit einer Querschraube (9) versehen ist, welche während des Zusammenwirkens mit einer Vertiefung (8) in der Spindel (7) so ausgebildet ist, um die Spindel (7) mit der Gewindehülse zusammenzusperren.

## Revendications

1. Outil servant à mesurer un filetage comprenant une fiche calibrée "passable" (1) et une fiche calibrée "non passable" (4) formées aux extrémités respectives d'un boîtier allongé (16), lequel boîtier comporte une douille filetée (10) vissée à une extrémité du boîtier (16), dans laquelle douille filetée est montée une broche (7) à l'intérieur du boîtier (10, 16), les extrémités opposées de ladite broche étant reliées auxdites fiches calibrées (1, 4), et dans lequel un support de fiche calibrée (12) portant un indicateur de valeurs de mesures (13) est agencé autour de la fiche calibrée "passable" (1), lequel support de fiche calibrée (12) est introduit de manière téléscopique à l'intérieur du boîtier (10, 16) en opposition à la résistance d'un ressort (11), caractérisé en ce qu'une extrémité de la broche (7) porte un filet (17) à l'extérieur construit pour coopérer avec un filet intérieur de la douille filetée (10) de telle sorte que la mise en place de la fiche calibrée (1) dans le boîtier (10, 16) soit réglable, que lesdites fiches calibrées (1, 4) comportent chacune respectivement une tige (2, 5) qui peut être inroduite dans des alésages respectifs (3, 6) aux extrémités respectives de la broche (7), et en ce que les tiges (2, 5) et les alésages (3, 6) sont cylindriques et légèrement en pointe, respectivement, ou inversement.

2. Outil servant à mesurer un filetage selon la revendication 1, caractérisé en ce que la douille filetée (10) comporte une vis transversale (9) qui, en coopération avec un logement (8) prévu dans la broche (7), est prévue pour verrouiller ensemble la broche (7) avec la douille filetée.

EP 0 294 439 B1

Fig. 1

Fig. 2

Fig. 3